# EUROPEAN PATENT SPECIFICATION

(11) **EP 4 542 360 B1**
(45) Date of publication and mention of the grant of the patent: **12.08.2026**
(21) Application number: 23888873.9
(22) Date of filing: 16.08.2023
(51) Int. Cl.: G06F 3/038, G06F 3/0482, G06F 3/04842, H04N 21/431, H04N 21/442, H04N 21/422

(54) **ELECTRONIC DEVICE AND CONTROL METHOD THEREFOR**
ELEKTRONISCHE VORRICHTUNG UND STEUERUNGSVERFAHREN DAFÜR
DISPOSITIF ÉLECTRONIQUE ET SON PROCÉDÉ DE COMMANDE

(30) Priority: 09.11.2022 KR 20220149016
(43) Date of publication of application: 23.04.2025
(60) Divisional application: 26191122.6
(73) Proprietor: Samsung Electronics Co., Ltd., Suwon-si, Gyeonggi-do 16677 (KR)
(72) Inventor: HWANG, Miseon, Suwon-si Gyeonggi-do 16677 (KR); YU, Hyelin, Suwon-si Gyeonggi-do 16677 (KR); CHO, Hyungrae, Suwon-si Gyeonggi-do 16677 (KR); CHOO, Heeyoung, Suwon-si Gyeonggi-do 16677 (KR)
(74) Representative: Appleyard Lees IP LLP
(86) International application number: PCT/KR2023/012104
(87) International publication number: WO 2024/101606

(56) References cited:
- CN-A- 103 458 303
- KR-A- 20140 091 289
- KR-A- 20150 022 303
- KR-A- 20170 022 074
- KR-A- 20190 069 870
- KR-B1- 101 803 407
- US-A1- 2008 052 624

## Description

### TECHNICAL FIELD

The disclosure relates to an electronic apparatus and a controlling method thereof, and more particularly, to an electronic apparatus that provides a user interface (UI) element in an optimized size and shape, and a controlling method thereof.

### BACKGROUND ART

Electronic apparatuses (e.g., smart television (TV), etc.) provide various Uls. In particular, an electronic apparatus guides a user to select a UI element by highlight one of a plurality of UI elements included in an UI.

However, in the related art, when the user is far from the electronic apparatus, the visibility of a highlighted UI element from among a plurality of UI elements included in an UI is low, so the user has to change his or her posture to move closer to the electronic apparatus in order to check the highlighted UI element, which causes inconvenience to the user.

US 2008/052624 A1 discloses a system including a content processing subsystem and a user device communicatively coupled to the content processing subsystem. The content processing subsystem is configured to provide content for experiencing by a user, the content processing subsystem being further configured to modify at least one element of the content based on a positional relationship between the content processing subsystem and the user device.

CN 103458303 A discloses a display method and electronic equipment. The electronic equipment is provided with a display unit and is in communication connection with an input device, and the input device is used for controlling the electronic equipment. The display method is applied to the electronic equipment and includes: receiving a first signal transmitted by the input device through the communication connection; acquiring distance parameters between the electronic equipment and the input device based on signal parameters of the first signal; judging whether the distance parameters meet a predetermined condition or not; if yes, switching at least one display object on the display unit from a first display status to a second display status based on the distance parameters, wherein the first display status is different from the second display status.

### DISCLOSURE

### TECHNICAL SOLUTION

According to an aspect of the disclosure, an electronic apparatus is provided in accordance with claim 1, and a controlling method is provided in accordance with claim 10.

In examples, an electronic apparatus includes a communication interface configured to communicate with an external device; a display; a memory configured to store at least one instruction; and a processor connected to the communication interface, the display and the memory, wherein the processor is configured to execute the at least one instruction to: based on a control signal being received by the external device while a user interface (UI) including a plurality of UI elements is displayed by the display, control the communication interface to transmit, to the external device, a request signal for requesting a location measurement signal; based on the location measurement signal being received from the external device, obtain information regarding a location of the external device based on the location measurement signal; identify a first UI element at which a highlight is located, from among the plurality of UI elements, based on the control signal; and control the display to adjust at least one of a size or a shape of the first UI element that is displayed, based on the information regarding the location of the external device.

The processor may be further configured to execute the at least one instruction to: identify a size of a text included in the first UI element based on a distance between the external device and the electronic apparatus; and control the display adjust the size of the first UI element that is displayed, based on the identified size of the text.

The processor may be further configured to execute the at least one instruction to: based on identifying that the distance between the external device and the electronic apparatus is a first distance, identify the size of the text included in the first UI element as a first size; and based on identifying that the distance between the external device and the electronic apparatus is a second distance that is greater than the first distance, identify the size of the text included in the first UI element as a second size that is greater than the first size.

The processor may be further configured to execute the at least one instruction to: receive eyesight information of a user from the external device through the communication interface; and identify the size of the text included in the first UI element based on the eyesight information of the user and the distance between the external device and the electronic apparatus.

The processor may be further configured to execute the at least one instruction to: predict the eyesight information of the user based on the size of the text displayed on the display and the distance between the electronic apparatus and the user of the external device; and identify the size of the text included in the first UI element based on the predicted eyesight information of the user and the distance between the external device and the electronic apparatus.

The processor may be further configured to execute the at least one instruction to: based on identifying that the external device is located to a left of the electronic apparatus, control the display to rotate and display the first UI element to the left; and based on identifying that the external device is located to a right of the electronic apparatus, control the display to rotate and display the first UI element to the right.

The processor may be further configured to execute the at least one instruction to: based on the UI being displayed on an image regarding a content, control the display to display the image regarding the content on a first layer and display the UI on a second layer; and control the display to adjust at least one of the size or the shape of the first UI element that is displayed on the second layer, based on the information regarding a the location of the external device while the image regarding the content displayed on the first layer is maintained.

The control signal may be a control signal for moving a highlight displayed on a UI element of the plurality of UI elements.

The processor may be further configured to execute the at least one instruction to: obtain the information regarding the location of the external device in real time based on the location measurement signal; and control the display to adjust at least one of the size or the shape of the first UI element that is displayed, based on the information regarding the location of the external device.

According to an aspect of the disclosure, a controlling method of an electronic apparatus includes, based on a control signal being received by an external device while a user interface (UI) including a plurality of UI elements is displayed, providing a request signal to the external device for requesting a location measurement signal; based on the location measurement signal being received from the external device, obtaining information regarding a location of the external device based on the location measurement signal; identifying a first UI element at which a highlight is located from among the plurality of UI elements based on the control signal; adjusting at least one of a size or a shape of the first UI element that is displayed, based on the information regarding the location of the external device.

The displaying may include: identifying a size of a text included in the first UI element based on a distance between the external device and the electronic apparatus; and adjusting the size of the first UI element that is displayed, based on the identified size of the text.

The identifying may include: based on identifying that the distance between the external device and the electronic apparatus is a first distance, identifying the size of the text included in the first UI element as a first size; and based on identifying that the distance between the external device and the electronic apparatus is a second distance that is greater than the first distance, identifying the size of the text included in the first UI element as a second size that is greater than the first size.

The controlling method may include receiving eyesight information of a user from the external device; and wherein the identifying may include identifying the size of the text included in the first UI element based on the eyesight information of the user and the distance between the external device and the electronic apparatus.

The controlling method may include predicting eyesight information of a user based on the size of the text displayed on the display and the distance between the electronic apparatus and the user using the external device; and wherein the identifying may include identifying the size of the text included in the first UI element based on the predicted eyesight information of the user and the distance between the external device and the electronic apparatus.

The displaying may include: based on identifying that the external device is located to a left of the electronic apparatus, rotating and displaying the first UI element to the left; and based on identifying that the external device is located to a right of the electronic apparatus, rotating and displaying the first UI element to the right.

According to an aspect of the disclosure, an electronic apparatus includes: a memory configured to store at least one instruction; and a processor configured to execute the at least one instruction to: based on a control signal being received by an external device while a user interface (UI) including a plurality of UI elements is displayed on a display, provide a request signal to the external device for requesting a location measurement signal; based on the location measurement signal being received from the external device, obtain information regarding a location of the external device based on the location measurement signal; identify a first UI element at which a highlight is located from among the plurality of UI elements based on the control signal; and control the display to adjust at least one of a size or a shape of the first UI element that is displayed, based on the information regarding the location of the external device.

The processor may be further configured to execute the at least one instruction to: identify a size of a text included in the first UI element based on a distance between the external device and the electronic apparatus; and control the display to adjust the size of the first UI element that is displayed, based on the identified size of the text.

The processor may be further configured to execute the at least one instruction to: based on identifying that the distance between the external device and the electronic apparatus is a first distance, identify the size of the text included in the first UI element as a first size; and based on identifying that the distance between the external device and the electronic apparatus is a second distance that is greater than the first distance, identify the size of the text included in the first UI element as a second size that is greater than the first size.

The processor may be further configured to execute the at least one instruction to: receive eyesight information of a user from the external device; and identify the size of the text included in the first UI element based on the eyesight information of the user and the distance between the external device and the electronic apparatus.

The processor may be further configured to execute the at least one instruction to: predict the eyesight information of the user based on the size of the text displayed on the display and the distance between the electronic apparatus and the user of the external device; and identify the size of the text included in the first UI element based on the predicted eyesight information of the user and the distance between the external device and the electronic apparatus.

### DESCRIPTION OF DRAWINGS

The above and other aspects, features, and advantages of embodiments of the disclosure will be more apparent from the following description taken in conjunction with the accompanying drawings, in which:
FIG. 1 is a view illustrating a display system including an electronic apparatus and an external device, according to one or more embodiments;
FIG. 2 is a block diagram illustrating a configuration of an electronic apparatus, according to one or more embodiments;
FIG. 3 is a block diagram illustrating a configuration for adjusting a highlighted UI element, according to one or more embodiments;
FIG. 4 is a sequence view provided to illustrate a controlling method of a system for adjusting a highlighted UI element according to a location of an external device, according to one or more embodiments;
FIG. 5 is a view provided to illustrate a method for adjusting a size of a highlighted UI element, according to a distance between an electronic apparatus and an external device;
FIGS. 6A and 6B are views provided to illustrate a method for adjusting a shape of a highlighted UI element according to a direction in which an external device is located, according to one or more embodiments;
FIGS. 7A and 7B are views provided to illustrate a UI including a highlighted UI element, according to various embodiments; and
FIG. 8 is a flowchart provided to illustrate a controlling method of an electronic apparatus, according to one or more embodiments.

### MODE FOR INVENTION

Below, various embodiments will be described. However, it is to be understood that the scope of the disclosure is not limited to the specific embodiments, and includes various modifications, equivalents, or alternatives according to the embodiments of the disclosure.

In the disclosure, an expression "have," "may have," "include," "may include" or the like, indicates existence of a corresponding feature (for example, a numerical value, a function, an operation or a component such as a part), and does not exclude existence of an additional feature.

In the disclosure, expressions "A or B," "least one of A and/or B," "one or more of A and/or B" and the like, may include all possible combinations of items enumerated together. For example, "A or B," "at least one of A and B" or "at least one of A or B" may indicate all of 1) a case where only A is included, 2) a case where only B is included, or 3) a case where both A and B are included.

Expressions "first," "second" and the like, used in the disclosure may indicate various components regardless of a sequence or importance of the components. These expressions are used only to distinguish one component from the other components, and do not limit the corresponding components. For example, a first user device and a second user device may represent different user devices regardless of order or importance. For example, without departing from the scope of rights described in this disclosure, a first component may be referred to as a second component and similarly, the second component may also be referred to as the first component.

In the disclosure, terms like "module", "unit", "part", or "engine" are terms used to refer to a component that performs at least one function or operation. Such a component may be implemented by hardware or software, or be implemented by a combination of hardware and software. In addition, a plurality of "modules", "units", "parts" or "engines" may be integrated with each other in at least one module or chip and implemented by a processor except when each of them needs to be implemented in specific hardware.

In case that any component (for example, a first component) is mentioned to be "(operatively or communicatively) coupled with/to" or "connected to" another component (for example, a second component), it is to be understood that any component may be directly coupled to another component or may be coupled to another component through still another component (for example, a third component). On the other hand, in case that any component (for example, a first component) is mentioned as being "directly coupled" or "directly connected" to another component (for example, a second component), it is to be understood that still other component (for example, a third component) does not exist between any component and another component.

An expression "configured (or set) to" used in the disclosure may be replaced by an expression "suitable for," "having the capacity to," "designed to," "adapted to," "made to" or "capable of" based on a situation. The expression "configured (or set) to" may not necessarily indicate "specifically designed to" in hardware. Instead, an expression of a device "configured to" in any situation may indicate that the device may "perform~" together with another device or component. For example, "a processor configured (or set) to perform A, B and C" may indicate a dedicated processor (for example, an embedded processor) for performing the corresponding operations or a generic-purpose processor (for example, a central processing unit (CPU) or an application processor) that may perform the corresponding operations by executing one or more software programs stored in a memory apparatus.

Terms used in this disclosure are only used to describe an embodiment, and may not be intended to limit the scope of other embodiments. Singular expressions may include plural expressions unless the context clearly indicates otherwise. Terms used herein, including technical or scientific terms, may have the same meaning as the terms commonly understood by those skilled in the art. Among the terms used in this disclosure, terms defined in general dictionaries may be interpreted as having the same or similar meanings as those in the context of the related art, and unless explicitly defined in this disclosure, they are not interpreted ideally or excessively. In some cases, even terms defined in this disclosure cannot be interpreted to exclude the embodiments of this disclosure.

Below, the disclosure will be described in greater detail with reference to the drawings. However, in describing the disclosure, if it is determined that a detailed description of a related known function or configuration may unnecessarily obscure the disclosure, the detailed description thereof will be omitted. In connection with the description of the drawings, like reference numerals may be used for like components.

Below, the disclosure will be disclosed in greater detail with reference to the drawings.

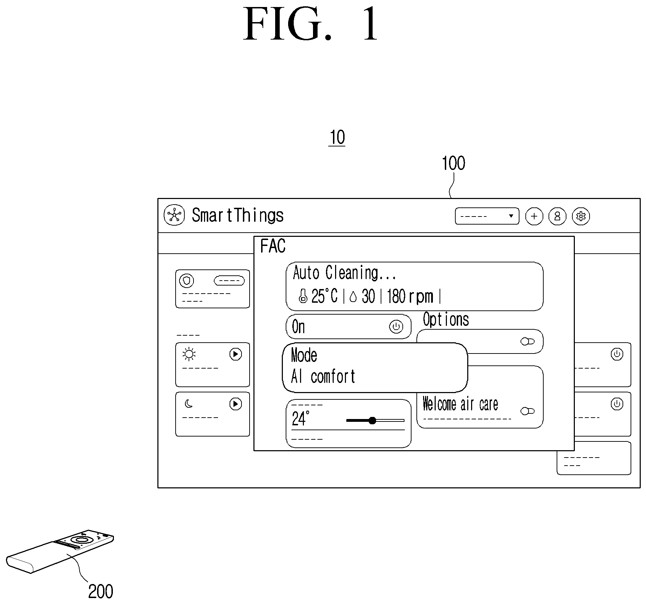

FIG. 1 is a view illustrating a display system including an electronic apparatus and an external device according to one or more embodiments. As illustrated in FIG. 1, a system 10 may include an electronic apparatus 100 and an external device 200. In this case, the electronic apparatus 100 may be implemented as a smart TV, but this is only an example. The electronic apparatus 100 may be implemented as a device such as a set-top box, a projector, etc. The external device 200 is a device for controlling the electronic apparatus 100, which can be implemented as a remote controller. However, this is only an example, and the external device 200 may be implemented as a portable device such as a smartphone, a tablet PC, etc.

The electronic apparatus 100 may display contents. In particular, the electronic apparatus 100 displays a UI including a plurality of UI elements that may be displayed on contents.

The external device 200 may receive a user command for controlling the electronic apparatus 100. When a user command is input, the external device 200 transmits a control signal corresponding to the user command to the electronic apparatus 100.

In response to the control signal, the electronic apparatus 100 transmits a request signal that requests a location measurement signal for identifying the current location of the external device 200 to the external device 200.

The external device 200 transmits a location measurement signal in response to the request signal, and the electronic apparatus 100 obtains information regarding the location of the external device 200 based on the received location measurement signal. In this case, the information on the location of the external device 200 may include information on a distance between the electronic apparatus 100 and the external device 200, information on a direction in which the external device 200 is located with reference to the electronic apparatus 100, etc.

The electronic apparatus 100 identifies a UI element where a highlight (or a focus) is located from among a plurality of UI elements included in a UI based on the signal transmitted by the external device 200, and adjusts and displays at least one of a size or shape of the highlighted UI element based on the information on the location of the external device 200.

As such, by providing a UI element having an optimal size and shape according to the location of the user that manipulates the external device 200, there is an effect of improving visibility.

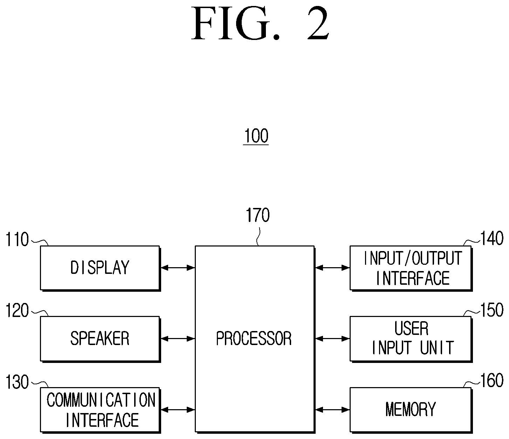

FIG. 2 is a block diagram illustrating configuration of an electronic apparatus according to one or more embodiments. As illustrated in FIG. 2, the electronic apparatus 100 may include a display 110, a speaker 120, a communication interface 130, an input/output interface 140, a user input unit 150, a memory 160, and a processor 170. The configuration of the electronic apparatus 100 illustrated in FIG. 1 is only an example, and some components may be added or deleted depending on the type of the electronic apparatus 100.

The display 110 may output various information. In particular, the display 110 may output contents provided from various sources. For example, the display 110 may output broadcasting contents received from the outside, output game contents received through a game server, and output broadcasting contents or game contents received from an external device (e.g., a set-top box or a game machine) connected through the input/output interface 140.

In addition, the display 110 may output various Uls. In this case, a UI may include a plurality of UI elements (or items). In particular, the UI may be a UI for changing the setting of the electronic apparatus 100 or a UI for selecting another content that a user wishes to watch, etc., but is not limited thereto.

In addition, the display 110 may generate a first layer including an image of contents and generate a second layer including a UI. Accordingly, when a UI is displayed on the image of contents, the display 110 may output the second layer including the UI on the first layer including the image of contents. In particular, when the size or shape of a highlighted UI element is changed, the display 110 may maintain the image of contents included in the first layer and change the size or shape of the highlighted element from among Uls included in the second layer.

The display 110 may be implemented as a Liquid Crystal Display Panel, an Organic Light Emitting Diodes (OLED), etc., and the display 110 may also be implemented as a flexible display, a transparent display, etc. depending on circumstances. However, the display 110 according to one or more embodiments is not limited to a specific type.

The speaker 120 may output various voice messages and audio. In particular, the speaker 120 may output audio of various contents. In this case, the speaker 120 may be provided inside the electronic apparatus 100, but this is only an example. The speaker 120 may be provided outside the electronic apparatus 100 and electrically connected to the electronic apparatus 100.

The communication interface 130 includes at least one circuit, and may perform communication with various types of external devices or servers. The communication interface 130 may include at least one of an IR module, a Bluetooth Low Energy (BLE) module, a Wi-Fi communication module, Ultra Wide Band (UWB) module, a cellular communication module, a 3^{rd} generation (3G) mobile communication module, a 4^{th} generation (4G) mobile communication module, a 4^{th} generation Long Term Evolution (LTE) communication module, or a 5^{th} generation (5G) mobile communication module.

According to one or more embodiments, when the electronic apparatus 100 performs communication with the external device 200 using a first communication module (e.g., an IR module) of the communication interface 130, the communication interface 130 may receive a control signal from the external device 200. The communication interface 130 may transmit a request signal that requests a location measurement signal to the external device 200, and receive a location measurement signal from the external device 200.

According to other embodiments, when the electronic apparatus 100 performs communication with the external device 200 using a second communication module (e.g., a BLE module, a UWB module, a BT module), etc. of the communication interface 130, the communication interface 130 may receive a control signal from the external device 200. In this case, the processor 170 may obtain information regarding the location of the external device 200 based on the received control signal.

The input/output interface 140 is configured to input/output at least one of audio or image signals. For example, the input/output interface 140 may be a High Definition Multimedia Interface (HDMI), but this is only an example. The input/output interface 140 may be one of Mobile High-Definition Link (MHL), Universal Serial Bus (USB), Display Port (DP), Thunderbolt, Video Graphics Array (VGA) port, RGB port, D-subminiature (D-SUB), or Digital Visual Interface (DVI). Depending on embodiments, the input/output interface 140 may include a port that inputs or outputs only audio signals and a port that inputs or outputs only image signals, separately, or may be implemented as one port that inputs or outputs both audio signals and image signals.

In particular, the electronic apparatus 100 may receive broadcasting contents or game contents from an external content providing (e.g., a set-top box, a game machine, etc.) through the input/output interface 140.

The user input unit 150 includes a circuit, and the processor 170 may receive a user command for controlling the operation of the electronic apparatus 100 through the user input unit 150. Specifically, the user input unit 150 may consist of a touch screen, a button, a keyboard, a mouse, etc.

In addition, the user input unit 150 may include a microphone capable of receiving a user voice. In this case, when the user input unit 150 is implemented as a microphone, the microphone may be provided inside the electronic apparatus 100.

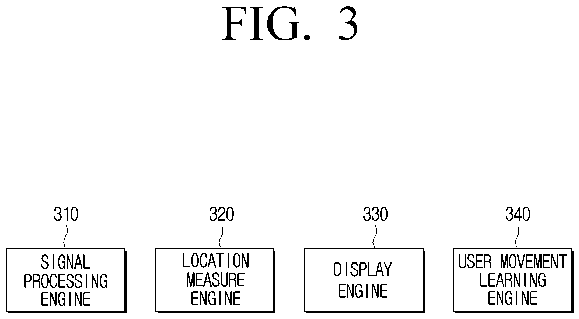

The memory 160 may store an Operating System for controlling the overall operations of the components of the electronic apparatus 100 and instructions or data related to the components of the electronic apparatus 100. In particular, the memory 160 may include a signal processing engine 310, a location measurement engine 320, a display engine 330, and a user movement learning engine 340 as illustrated in FIG. 3 in order to provide a UI having an optimum size and shape according to the location of an external device. In particular, when the electronic apparatus 100 is executed, a module for providing a UI element having an optimum size and shape according to the location of an external device stored in a non-volatile memory may load data for performing various operations onto a volatile memory. Here, loading refers to an operation of calling and storing data stored in the non-volatile memory in the volatile memory so that the processor 170 can access the data.

In addition, the memory 160 may store the user's eyesight information learned by the user movement learning engine 340.

The memory 160 may be implemented as a non-volatile memory (e.g., hard disk, Solid state drive (SSD), flash memory), a volatile memory (which may also include a memory in the processor 180), etc.

The processor 170 may control the electronic apparatus 100 according to at least one instruction stored in the memory 160. In particular, the processor 170 may consist of one or more processors. In this case, one or more processors may include one or more of Central Processing Unit (CPU), Graphics Processing Unit (GPU), Accelerated Processing Unit (APU), Many Integrated Core (MIC), Digital Signal Processor (DSP), Neural Processing Unit (NPU), hardware accelerator or machine learning accelerator. One or more processors may control one or any combination of other components of the electronic apparatus 100, and may perform operations related to communication or data processing. One or more processors may execute one or more programs or instructions stored in the memory 160. For example, one or more processors may perform a method according to one or more embodiments by executing one or more instructions stored in the memory 160.

When a method according to one or more embodiments includes a plurality of operations, the plurality of operations may be performed by one processor or a plurality of processors. For example, when a first operation, a second operation and a third operation are performed by a method according to one or more embodiments, the first operation, the second operation and the third operation may all be performed by a first processor, or the first operation and the second operation may be performed by the first processor (e.g., a general-purpose processor) and the third operation may be performed by a second processor (e.g., an Al-only processor).

One or more processors may be implemented as a single core processor including one core, or may be implemented as at least one multi-core processor including multi-cores (e.g., homogeneous multi-cores or heterogeneous multi-cores). In case that one or more processors are implemented as the multi-core processor, each of a plurality of cores included in the multi-core processor may include an internal memory of the processor such as a cache memory or an on-chip memory, and a common cache shared by the plurality of cores may be included in the multi-core processor. In addition, each of the plurality of cores (or some of the plurality of cores) included in the multi-core processor may independently read and perform a program instruction for implementing the method according to one or more embodiments, or all (or some) of the plurality of cores may be linked to read and perform the program instruction for implementing the method according to one or more embodiments.

In case that the method according to one or more embodiments includes a plurality of operations, the plurality of operations may be performed by one of the plurality of cores included in the multi-core processor or may be performed by the plurality of cores. For example, when the first operation, the second operation and the third operation are performed by a method according to one or more embodiments, the first operation, the second operation and the third operation may all be performed by the first core included in the multi-core processor, or the first operation and the second operation may be performed by the first core included in the multi-core processor and the third operation may be performed by the second core included in the multi-core processor.

In embodiments of the disclosure, the processor 170 may be a system on a chip (SoC) in which one or more processors and other electronic components are integrated, a single-core processor, a multi-core processor, or a core included in a single-core processor or a multi-core processor and here, the core may be implemented as CPU, GPU, APU, MIC, DSP, NPU, hardware accelerator or machine learning accelerator, but embodiments are not limited thereto.

In particular, when a control signal is received by the external device 200 while a UI including a plurality of UI elements is displayed, the processor 170 controls the communication interface 130 to transmit a request signal that requests a location measurement signal to the external device. When receiving a location measurement signal from the external device 200, the processor 170 obtains information regarding the location of the external device based on the location measurement signal. The processor 170 identifies a first UI element where a highlight is located from among a plurality of UI elements based on the control signal. The processor 170 controls the display 110 to adjust at least one of the size or shape of the first UI element based on the information regarding the location of the external device and display the same.

In particular, the processor 170 may identify the size of texts included in the first UI element based on the distance between the external device and the electronic apparatus. Also, the processor 170 may control the display 110 to adjust the size of the first UI element based on the identified size of texts and display the same.

When it is determined that the distance between the external device 200 and the electronic apparatus 100 is a first distance, the processor 170 may identify that the size of the texts included in the first UI element as a first size, and when it is determined that the distance between the external device 200 and the electronic apparatus 100 is a second distance that is greater than the first distance, the processor 170 may identify that the size of the texts included in the first UI element is a second size that is greater than the first size.

In addition, the processor 170 may receive eyesight information of the user who uses the external device 200 from the external device 200 through the communication interface 130. Also, the processor 170 may identify the size of the texts included in the first UI element based on the user's eyesight information and the distance between the external device 200 and the electronic apparatus 100.

In addition, the processor 170 may predict the user's eyesight information based on the size of the texts displayed on the display 110 and the distance between the electronic apparatus 100 and the user when controlling the electronic apparatus 100 using the external device 200. The processor 170 may identify the size of the texts included in the first UI element based on the predicted eyesight information of the user and the distance between the external device 200 and the electronic apparatus 100.

In addition, when it is determined that the external device 200 is located on the left side of the electronic apparatus 100, the processor 170 may control the display 110 to rotate and display the first UI element to the left. Alternatively, when it is determined that the external device 200 is located on the right side of the electronic apparatus 100, the processor 170 may control the display 110 to rotate and display the first UI element to the right.

In addition, when a UI is displayed on an image regarding a content, the processor 170 may control the display 110 to display the image regarding the content on a first layer and display the UI on a second layer. While maintaining the image regarding the content displayed on the first layer, the processor 170 may control the display 110 to adjust at least one of the size or shape of the first UI element displayed on the second layer based on information regarding the location of the external device 200 and display the same.

The control signal according to one or more embodiments may be a control signal for moving a highlight displayed on one of a plurality of UI elements, but is not limited thereto.

The processor 170 may obtain information regarding the location of the external device 200 in real time based on a location measurement signal, and control the display 110 to adjust at least one of the size or shape of the first UI element based on the information regarding the location of the external device 200 in real time and display the same.

FIG. 3 is a block diagram illustrating configuration for adjusting a highlighted UI element according to one or more embodiments. As illustrated in FIG. 3, the components for adjusting the highlighted UI element according to the location of the user may include the signal processing engine 310, the location measurement engine 320, the display engine 330 and the user movement learning engine 340.

The signal processing engine 310 may analyze a signal received from the external device 200. The signal processing engine 310 may recognize information regarding an event corresponding to a control signal based on a control signal received from the external device 200. For example, when a control signal of moving a highlight to the right is received from the external device 200, the signal processing engine 310 may recognize information regarding an event of moving the highlight to the right by processing the control signal. Also, the signal processing engine 310 may recognize a location measurement signal received from the external device 200. When the location measurement signal is recognized, the signal processing engine 310 may output information included in the location measurement signal to the location measurement engine 320.

The location measurement engine 320 may calculate the location of the external device 200 based on information included in the location measurement signal. For example, when the external device 200 includes a plurality of IR transmitters, the location measurement engine 320 may obtain information regarding a distance between the external device 200 and the electronic apparatus 100 based on the time when a request signal is transmitted and the time when a location measurement signal transmitted from the plurality of IR transmitters is received. Also, the location measurement engine 320 may obtain information regarding a direction in which the external device 200 is located from the electronic apparatus 100 based on a time difference between location measurement signals transmitted from the plurality of IR transmitters. However, as described above, obtaining information regarding the location of the external device 200 through the plurality of IR transmitters is only an example, and information regarding the location of the external device 200 may be obtained based on a signal received through a communication module in various ways.

The display engine 330 may process and display a UI included in the display 110 based on a signal received from the external device 200.

The display engine 330 may identify a UI element where a highlight is located from among a plurality of UI elements included in the UI based on a control signal. For example, when a control signal of moving a highlight to the right is received, the display engine 330 may identify a UI element located to the right of a highlighted UI element before a control signal is received as a UI element where highlight is located.

Also, the display engine 330 may change at least one of the size or shape of the highlighted UI element based on information regarding the location of the external device 200 obtained by the location measurement engine 320. The display engine 330 may identify the size of the texts included in the highlighted UI element based on the distance between the external device 200 and the electronic apparatus 100, adjust the size of the highlighted UI element based on the identified size of the texts and display the same. In particular, when it is determined that the distance between the external device 200 and the electronic apparatus 100 is a first distance, the display engine 330 may identify the size of the texts included in the highlighted UI element as a first size. When it is determined that the distance between the external device 200 and the electronic apparatus 100 is a second distance that is greater than the first distance, the display engine 330 may identify that the size of the texts included in the highlighted UI element as a second size that is greater than the first size. In other words, the display engine 330 increases the size of the texts included in the UI element as the distance between the external device 200 and the electronic apparatus 100 increases, so the size of the UI element may also increase.

In addition, the display engine 330 may identify the size of texts included in the highlighted UI element based on the user's eyesight information and the distance between the external device 200 and the electronic apparatus 100. In this case, the user's eyesight information may be transmitted from the external device 200 or may be predicted through the user movement learning engine 340.

Also, when it is determined that the external device 200 is located to the left of the electronic apparatus 100, the display engine 330 may rotate and display the highlighted UI element to the left, and when it is determined that the external device 200 is located to the right of the electronic apparatus 100, the display engine 330 may rotate and display the highlighted UI element to the right.

The user movement learning engine 340 may predict the user's eyesight information by learning the user's movement when a control signal is received from the external device 200. For example, when controlling the electronic apparatus 100 using the external device 200, the user movement learning engine 340 may measure the distance between the electronic apparatus 100 and the user based on a location measurement signal received from a camera included in the electronic apparatus 100 or the external device 200 when controlling the electronic apparatus 100 using the external device 200. In other words, when controlling the electronic apparatus 100 using the external device 200, the user movement learning engine 340 may measure whether the user approaches the electronic apparatus 100. When controlling the electronic apparatus 100 using the external device 200, the user movement learning engine 340 may predict the user's eyesight information based on the size of texts displayed on the display 110 and the user's movement (i.e., the distance between the electronic apparatus 100 and the user). For example, when the size of the texts displayed on the display is 10 and the distance between the user (the external device 200) and the electronic apparatus 100 is 3m, the user movement learning engine 340 may predict the user's eyesight as 1.0, and when the size of the texts displayed on the display is 10 and the distance between the user (the external device 200) and the electronic apparatus 100 is 2m, the user movement learning engine 340 may predict the user's eyesight as 0.5.

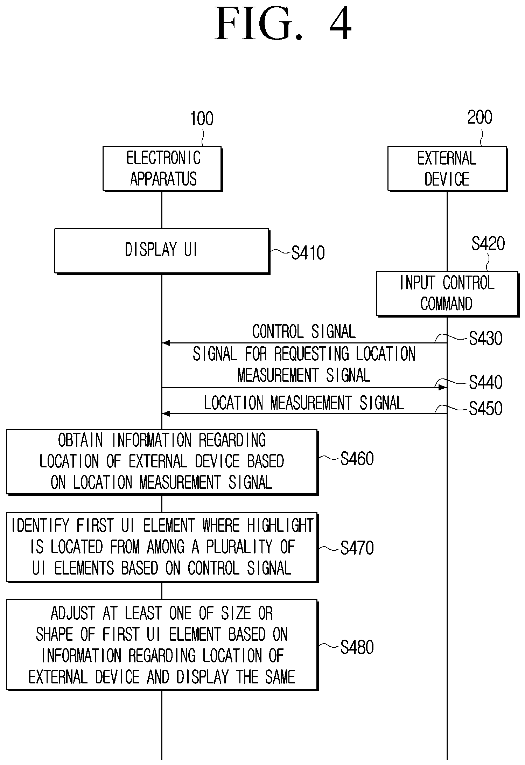

FIG. 4 is a sequence view provided to illustrate a controlling method of a system for adjusting a highlighted UI element according to a location of an external device according to one or more embodiments.

Firstly, the electronic apparatus 100 may display a UI (410). In this case, the UI may be implemented as various Uls such as a UI for changing the setting of the electronic apparatus 100, a UI for changing the setting of a currently displayed content, a UI for selecting other contents, etc. In addition, the UI may include a plurality of UI elements, and a highlight for the user to select may be located on one of the plurality of UI elements.

The external device 200 may receive a control command (S420). In this case, the control command may be a control command for manipulating a highlight displayed on an UI, but this is only an example. The control command may be another control command. For example, when the electronic apparatus 100 displays only a content without displaying a UI, the control command may be a command for controlling to display a UI on the content.

The external device 200 may transmit a control signal generated according to a control command to the electronic apparatus 100 (S430).

When receiving a control signal, the electronic apparatus 100 may transmit a signal that requests a location measurement signal (S440). In response to the request signal, the external device 200 may transmit a location measurement signal to the electronic apparatus 100 (S450). When the received control signal is not a control signal for changing the current screen (e.g., a mute command, etc.), the electronic apparatus 100 may not transmit a signal that requests a location measurement signal to the external device 200.

Also, when there is a communication module capable of measuring a location through a control signal from among communication modules of the electronic apparatus 100, steps of S440 and S450 may be omitted. When steps of S440 and S450 are omitted, the electronic apparatus 100 may obtain information regarding the external device 200 based on a control signal.

The electronic apparatus 100 may obtain information regarding the location of the external device 200 based on a location measurement signal (S460). In this case, the electronic apparatus 100 may obtain information regarding a distance between the electronic apparatus 100 and the external device 200 and a direction in which the external device 200 is located with reference to the electronic apparatus 100.

The electronic apparatus 100 may identify a first UI element at which a highlight is located from among a plurality of UI elements based on a control signal (S470). In other words, the electronic apparatus 100 may identify the first UI element at which a highlight is located from among a plurality of UI elements according to a control command included in a control signal. For example, when a control command for moving a highlight in a first direction is included in a control signal, the electronic apparatus 100 may identify the first UI element located in the first direction from a highlighted UI element before the control signal is received as a UI element where a highlight is located.

The electronic apparatus 100 may adjust at least one of the size or shape of the first UI element based on information regarding the location of the external device 200 and display the same (S480).

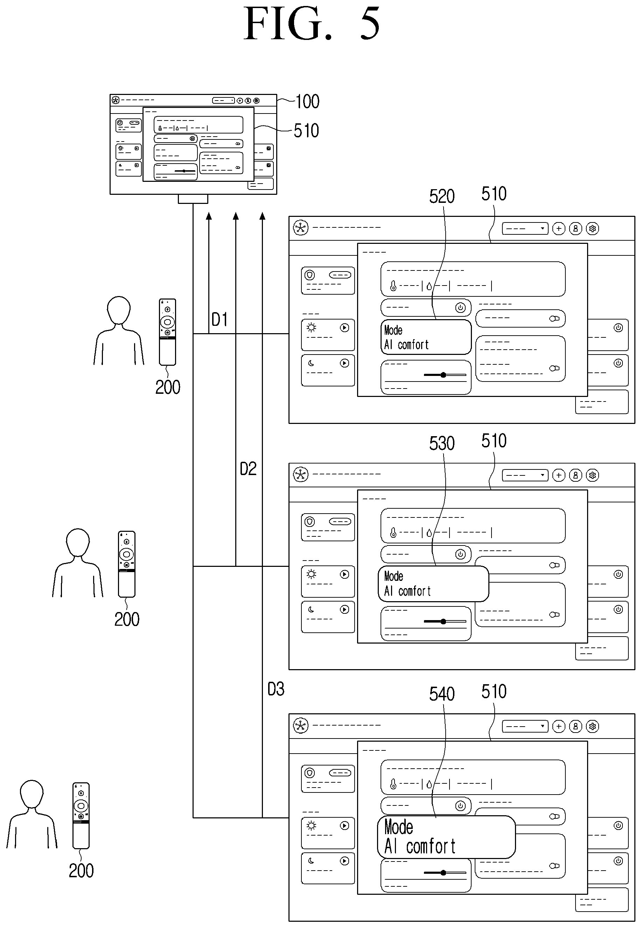

This will be described in detail with reference to FIGS. 5 to 7B.

FIG. 5 is a view provided to illustrate a method for adjusting a size of a highlighted UI element according to a distance between an electronic apparatus and an external device.

As illustrated at the top of FIG. 5, the electronic apparatus 100 may display a UI 510 on the content image. When it is determined that the distance between the electronic apparatus 100 and the external device 200 is a first distance (D1) based on a location measurement signal, the electronic apparatus 100 may identify a first size of a text corresponding to the first distance (D1), adjust the size of a first UI element 520 to include the text of the first size and display the same on the UI 510. When it is determined that the distance between the electronic apparatus 100 and the external device 200 is a second distance (D2) that is greater than the first distance (D1) based on a location measurement signal, the electronic apparatus 100 may identify a second size (here, the second size is greater than the first size) of a text corresponding to the second distance (D2), adjust the size of the first UI element 530 to include the text of the second size, and display the same on the UI 510. When it is determined that the distance between the electronic apparatus 100 and the external device 200 is a third distance (D3) that is greater than the first distance (D1) and the second distance (D2) based on a location measurement signal, the electronic apparatus 100 may identify a third size (here, the third size is greater than the first size and the second size) of a text corresponding to the third distance (D3), adjust the size of the first UI element 540 to include the text of the third size, and display the same on the UI 510.

In other words, the electronic apparatus 100 may increase the size of the text included in the first UI element where a highlighted is located as the distance between the electronic apparatus 100 and the external device 200 increases, thereby also increasing the size of the first UI element.

According to one or more embodiments, the electronic apparatus 100 linearly adjust the size of the first UI element (or the text included in the first UI element) according to the distance between the electronic apparatus 100 and the external device 200, but this is only an example. The size of the first UI element may be increased step by step according to the distance between the electronic apparatus 100 and the external device 200. For example, when the distance between the electronic apparatus 100 and the external device 200 is less than the first distance (D1), the electronic apparatus 100 may adjust the size of the first UI element to include a text of a predetermined size, when the distance between the electronic apparatus 100 and the external device 200 is equal to or greater than the first distance (D1) and less than the second distance (D2), the electronic apparatus 100 may adjust the size of the first UI element to include a text of the first size, when the distance between the electronic apparatus 100 and the external device 200 is equal to or greater than the second distance (D2) and less than the third distance (D3), the electronic apparatus 100 may adjust the size of the first UI element to include a text of the second size, and when the distance between the electronic apparatus 100 and the external device 200 is equal to or greater than the third distance (D3), the electronic apparatus 100 may adjust the size of the first UI element to include a text of the third size.

ln addition, the electronic apparatus 100 may identify the size of a text included in a UI element based on not only the distance between the electronic apparatus 100 and the external device 200 but also information regarding a user's eyesight. For example, when the distance between the electronic apparatus 100 and the external device 200 is D1 or the eyesight of a first user is 1.0, the electronic apparatus 100 may adjust the size of the first UI element to include a text of the first size. However, when the distance between the electronic apparatus 100 and the external device 200 is D1 or the eyesight of a second user is 0.5, the electronic apparatus 100 may adjust the size of the first UI element to include a text of the second size that is greater than the first size. In this case, information regarding the user's eyesight may be received from the external device 200, but this is only an example. It can be predicted from the user movement learning engine 340.

In the above-described embodiment, a text is included in a UI element, but this is only an example. The UI element may include symbols, icons, thumbnail images, etc. Accordingly, the electronic apparatus 100 may adjust at least one of a symbol, an icon, or a thumbnail image included in a highlighted UI element based on the distance between the electronic apparatus 100 and the external device 200.

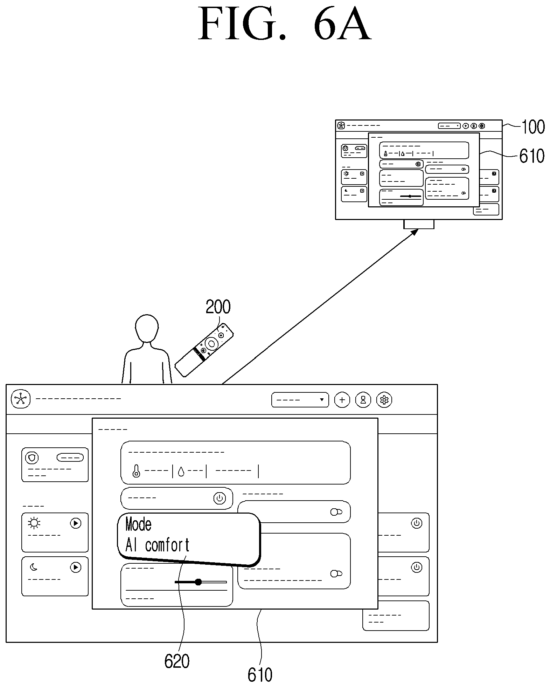

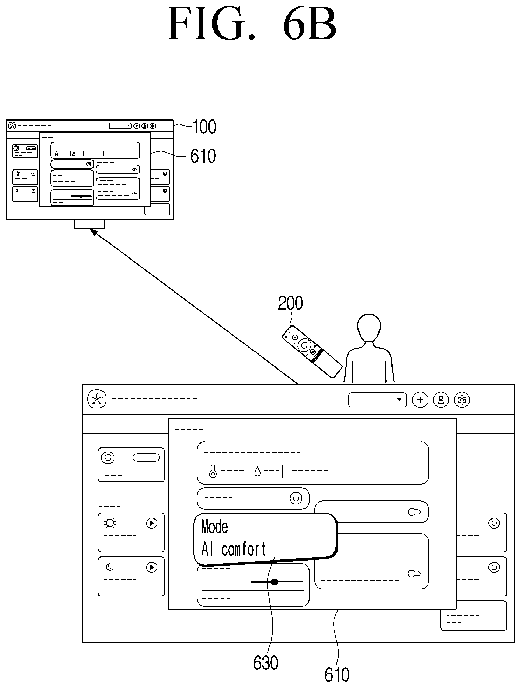

FIGS. 6A and 6B are views provided to illustrate a method for adjusting a shape of a highlighted UI element according to a direction in which an external device is located according to one or more embodiments.

As illustrated in FIG. 6A, when it is determined that the external device 200 is located to the left of the electronic apparatus 100 based on a location measurement signal, the electronic apparatus 100 may rotate and display a first UI element 620 where a highlight is located within a UI 610 to the left as illustrated in FIG. 6A. In other words, the electronic apparatus 100 may adjust and display the shape of the first UI element 620 in order to provide an image effect as if the first UI element 620 is rotated to the left.

As illustrated in FIG. 6B, when it is determined that the external device 200 is located to the right of the electronic apparatus 100 based on a location measurement signal, the electronic apparatus 100 may rotate and display a first UI element 630 where a highlight is located within the UI 610 to the right as illustrated in FIG. 6B. In other words, the electronic apparatus 100 may adjust and display the shape of the first UI element 630 in order to provide an image effect as if the first UI element 630 is rotated to the left.

As such, by providing an image effect as if the first UI elements 620, 630 are rotated to the left or to the right, the user may provide a perspective effect to the first UI elements 620, 630.

The electronic apparatus 100 obtains information regarding the location of the external device 200 in real time based on a location measurement signal received in real time after receiving a control signal, and adjust and display at least one of the size or shape of the first UI element based on the information regarding the location of the external device 200. However, this is only an example, and when receiving a control signal, the electronic apparatus 100 may obtain information regarding the location of the external device 200 based on the location measurement signal following the control command and adjust and display at least one of the size or shape of the first UI element based on the information regarding the location of the external device 200. Then, until the next control signal is received, the electronic apparatus 100 may maintain the size and shape of the first UI element based on the existing information regarding the location of the external device 200 so that the external device 200 moves.

As a distance between the electronic apparatus 100 and the external device 200 increases, the size of the first UI element where a highlight is located may increase. As such, due to the increase in the size of the first UI element, at least part of other UI elements may not be displayed. In this case, the user may feel inconvenience as it is not possible to see the part of other UI elements which is blocked by the first UI element.

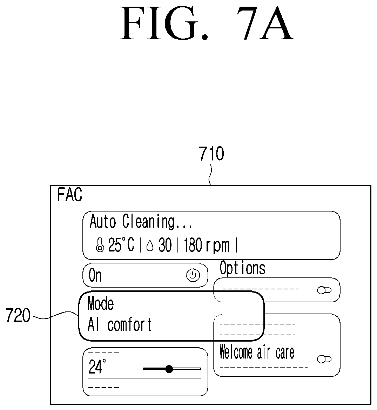

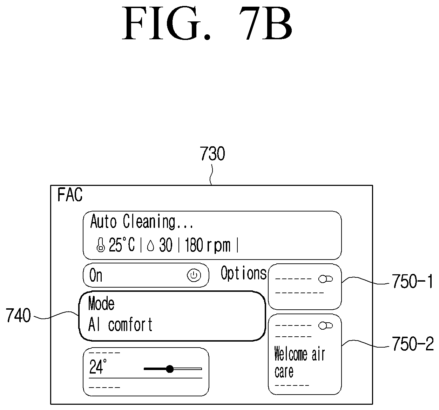

According to one or more embodiments, the electronic apparatus 100 may semi-transparently display a first UI element 720 overlapped with other UI elements included in a UI 710 as illustrated in FIG. 7A. According to other embodiments, the electronic apparatus 100 may change and display at least one of a size or location of at least some of UI elements 750-1, 750-2 other than a highlighted first UI element 740 included in a UI 730 as illustrated in FIG. 7B.

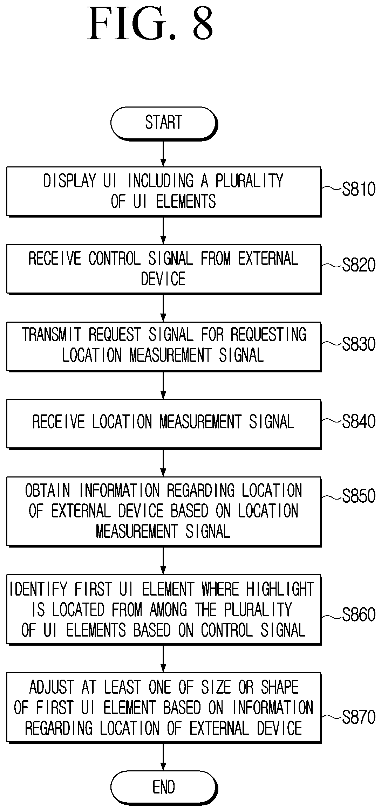

FIG. 8 is a flowchart provided to illustrate a controlling method of an electronic apparatus according to one or more embodiments.

The electronic apparatus 100 may display a UI including a plurality of UI elements (S810).

The electronic apparatus 100 may receive a control signal from the external device 200 (S820). In this case, the control signal may be a control signal for moving a highlight displayed on one of the plurality of UI elements.

The electronic apparatus 100 may transmit a request signal for requesting a location measurement signal (S830).

The electronic apparatus 100 may receive a location measurement signal from the external device 200 (S840).

The electronic apparatus 100 may obtain information regarding a location of the external device 200 based on the location measurement signal (S850).

The electronic apparatus 100 may identify a first UI element where a highlight is located from among the plurality of UI elements based on the control signal (S860).

The electronic apparatus 100 may adjust and display at least one of a size or shape of the first UI element based on the information regarding the location of the external device 200 (S870).

The electronic apparatus 100 may identify a size of a text included in the first UI element where a highlight is located based on a distance between the external device 200 and the electronic apparatus 100. The electronic apparatus 100 may adjust and display the size of the first UI element based on the identified size of the text. For example, when it is identified that the distance between the external device 200 and the electronic apparatus 100 is a first distance, the electronic apparatus 100 may identify the size of the text included in the first UI element as a first size. According to another example, when it is identified that the distance between the external device 200 and the electronic apparatus 100 is a second distance that is greater than the first distance, the electronic apparatus 100 may identify the size of the text included in the first UI element as a second size that is greater than the first size.

In addition, the electronic apparatus 100 may receive eyesight information of a user who uses the external device 200 from the external device 200. The electronic apparatus 100 may identify the size of the text included in the first UI element based on the user's eyesight information and the distance between the external device 200 and the electronic apparatus 100.

When controlling electronic apparatus 100 using the external device 200, the electronic apparatus 100 may predict the user's eyesight information based on the size of the text displayed on the display 110 and the distance between the electronic apparatus and the user. In addition, the electronic apparatus 100 may identify the size of the text included in the first UI element based on the predicted eyesight information of the user and the distance between the external device 200 and the electronic apparatus 100.

In addition, when it is determined that the external device 200 is located to the left of the electronic apparatus 100, the electronic apparatus 100 may rotate and display the first UI element to the left. Alternatively, when it is determined that the external device 200 is located to the right of the electronic apparatus 100, the electronic apparatus 100 may rotate and display the first UI element to the right.

In addition, when the UI is displayed on an image regarding a content, the image regarding the content may be displayed on a first layer and the UI may be displayed on a second layer. In this case, the electronic apparatus 100 may adjust and display at least one of the size and shape of the first UI element displayed on the second layer based on information regarding the location of the external device 200 while the image regarding the content displayed on the first layer is maintained.

In addition, the electronic apparatus 100 may obtain information regarding the location of the external device 200 in real time based on a location measurement signal, and adjust and display at least one of the size or shape of the first UI element based on the information regarding the location of the external device.

According to one or more embodiments, methods according to the various embodiments disclosed herein may be provided while being included in a computer program product. A computer program product refers to a product, and it can be traded between a seller and a buyer. A computer program product can be distributed in the form of a storage medium that is readable by machines (e.g., a compact disc read only memory (CD-ROM)), or distributed directly on-line (e.g., download or upload) through an application store (e.g.: Play Store^{™}), or between two user devices (e.g., smartphones). In the case of on-line distribution, at least a portion of a computer program product (e.g., a downloadable app) may be stored in a storage medium readable by machines such as the server of the manufacturer, the server of the application store, and the memory of the relay server at least temporarily, or may be generated temporarily.

According to one or more embodiments, methods according to the various embodiments may be implemented as software including instructions stored in machine-readable storage media, which are readable by a machine (e.g., a computer). The machine is a device capable of calling a stored instruction from a storage medium and operating according to the called instruction, and may include an electronic apparatus according to the disclosed embodiments.

The device-readable storage medium may be provided in the form of a non-transitory storage medium. Here, 'non-temporary storage medium' only means that it is a tangible device and does not contain signals (e.g., electromagnetic waves). This term does not distinguish between a case in which data is stored semi-permanently in a storage medium and a case in which data is stored temporarily. For example, a 'non-temporary storage medium' may include a buffer in which data is temporarily stored.

When the instruction is executed by the processor, the processor may perform a function corresponding to the instruction directly or using other components under the control of the processor. The instruction may include a code generated or executed by a compiler or an interpreter.

In the above, embodiments have been illustrated and described, but the disclosure is not limited to the specific embodiments described above. Various modifications are possible by the disclosure, the scope of the invention being defined by the appended claims.

## Claims

1. An electronic apparatus (100) comprising:
a communication interface (130) configured to communicate with an external device (200);
a display (110);
a memory (160) configured to store at least one instruction; and
a processor (170) connected to the communication interface, the display and the memory,
wherein the processor (170) is configured to execute the at least one instruction to:
based on a control signal being received by the external device while a user interface (UI) including a plurality of UI elements is displayed by the display, control the communication interface to transmit, to the external device, a request signal for requesting a location measurement signal;
based on the location measurement signal being received from the external device, obtain information regarding a location of the external device based on the location measurement signal;
identify a first UI element at which a highlight is located, from among the plurality of UI elements, based on the control signal; and
**characterised in that** the processor is further configured to execute the at least one instruction to:
control the display to adjust at least one of a size or a shape of the first UI element that is displayed, based on the information regarding the location of the external device.

2. The electronic apparatus as claimed in claim 1, wherein the processor is further configured to execute the at least one instruction to:
identify a size of a text included in the first UI element based on a distance between the external device and the electronic apparatus; and
control the display to adjust the size of the first UI element that is displayed, based on the identified size of the text.

3. The electronic apparatus as claimed in claim 2, wherein the processor is further configured to execute the at least one instruction to:
based on identifying that the distance between the external device and the electronic apparatus is a first distance, identify the size of the text included in the first UI element as a first size; and
based on identifying that the distance between the external device and the electronic apparatus is a second distance that is greater than the first distance, identify the size of the text included in the first UI element as a second size that is greater than the first size.

4. The electronic apparatus as claimed in claim 2, wherein the processor is further configured to execute the at least one instruction to:
receive eyesight information of a user from the external device through the communication interface; and
identify the size of the text included in the first UI element based on the eyesight information of the user and the distance between the external device and the electronic apparatus.

5. The electronic apparatus as claimed in claim 4, wherein the processor is further configured to execute the at least one instruction to:
predict the eyesight information of the user based on the size of the text displayed on the display and the distance between the electronic apparatus and the user of the external device; and
identify the size of the text included in the first UI element based on the predicted eyesight information of the user and the distance between the external device and the electronic apparatus.

6. The electronic apparatus as claimed in claim 1, wherein the processor is further configured to execute the at least one instruction to:
based on identifying that the external device is located to a left of the electronic apparatus, control the display to rotate and display the first UI element to the left; and
based on identifying that the external device is located to a right of the electronic apparatus, control the display to rotate and display the first UI element to the right.

7. The electronic apparatus as claimed in claim 1, wherein the processor is further configured to execute the at least one instruction to:
based on the UI being displayed on an image regarding a content, control the display to display the image regarding the content on a first layer and display the UI on a second layer; and
control the display to adjust at least one of the size or the shape of the first UI element that is displayed on the second layer, based on the information regarding the location of the external device while the image regarding the content displayed on the first layer is maintained.

8. The electronic apparatus as claimed in claim 1, wherein the control signal is a control signal for moving a highlight displayed on a UI element of the plurality of UI elements.

9. The electronic apparatus as claimed in claim 1, wherein the processor is further configured to execute the at least one instruction to:
obtain the information regarding the location of the external device in real time based on the location measurement signal; and
control the display to adjust at least one of the size or the shape of the first UI element that is displayed, based on the information regarding the location of the external device.

10. A controlling method of an electronic apparatus, the controlling method comprising:
based on a control signal being received by an external device while a user interface (UI) including a plurality of UI elements is displayed, transmitting a request signal to the external device for requesting a location measurement signal;
based on the location measurement signal being received from the external device, obtaining information regarding a location of the external device based on the location measurement signal;
identifying a first UI element at which a highlight is located from among the plurality of UI elements based on the control signal; and
**characterised by** further comprising:
adjusting at least one of a size or a shape of the first UI element that is displayed, based on the information regarding the location of the external device.

11. The controlling method as claimed in claim 10, wherein the displaying comprises:
identifying a size of a text included in the first UI element based on a distance between the external device and the electronic apparatus;
adjusting the size of the first UI element that is displayed, based on the identified size of the text.

12. The controlling method as claimed in claim 11, wherein the identifying comprises:
based on identifying that the distance between the external device and the electronic apparatus is a first distance, identifying the size of the text included in the first UI element as a first size; and
based on identifying that the distance between the external device and the electronic apparatus is a second distance that is greater than the first distance, identifying the size of the text included in the first UI element as a second size that is greater than the first size.

13. The controlling method as claimed in claim 11, wherein the controlling method comprises receiving eyesight information of a user from the external device; and
wherein the identifying comprises identifying the size of the text included in the first UI element based on the eyesight information of the user and the distance between the external device and the electronic apparatus.

14. The controlling method as claimed in claim 11, wherein the controlling method comprises predicting eyesight information of a user based on the size of the text displayed on the display and the distance between the electronic apparatus and the user using the external device; and
wherein the identifying comprises identifying the size of the text included in the first UI element based on the predicted eyesight information of the user and the distance between the external device and the electronic apparatus.

15. The controlling method as claimed in claim 10, wherein the displaying comprises:
based on identifying that the external device is located to a left of the electronic apparatus, rotating and displaying the first UI element to the left; and
based on identifying that the external device is located to a right of the electronic apparatus, rotating and displaying the first UI element to the right.

## Patentansprüche

1. Elektronische Einrichtung (100), umfassend:
eine Kommunikationsschnittstelle (130), die dazu konfiguriert ist, mit einer externen Vorrichtung (200) zu kommunizieren;
eine Anzeige (110);
einen Speicher (160), der dazu konfiguriert ist, mindestens eine Anweisung zu speichern; und
einen Prozessor (170), der mit der Kommunikationsschnittstelle, der Anzeige und dem Speicher verbunden ist,
wobei der Prozessor (170) dazu konfiguriert ist, die mindestens eine Anweisung zu Folgendem auszuführen:
basierend darauf, dass ein Steuersignal durch die externe Vorrichtung empfangen wird, während eine Benutzerschnittstelle (UI), die eine Vielzahl von UI-Elementen enthält, durch die Anzeige angezeigt wird, Steuern der Kommunikationsschnittstelle, um an die externe Vorrichtung ein Anforderungssignal zum Anfordern eines Positionsmesssignals zu übertragen;
basierend darauf, dass das Positionsmesssignal von der externen Vorrichtung empfangen wird, Erlangen von Informationen bezüglich einer Position der externen Vorrichtung basierend auf dem Positionsmesssignal;
Identifizieren eines ersten UI-Elements, an dem sich eine Markierung befindet, aus der Vielzahl von UI-Elementen basierend auf dem Steuersignal; und
**dadurch gekennzeichnet, dass** der Prozessor ferner dazu konfiguriert ist, die mindestens eine Anweisung zu Folgendem auszuführen:
Steuern der Anzeige, um mindestens eines von einer Größe oder einer Form des ersten UI-Elements, das angezeigt wird, basierend auf den Informationen bezüglich der Position der externen Vorrichtung anzupassen.

2. Elektronische Einrichtung nach Anspruch 1, wobei der Prozessor ferner dazu konfiguriert ist, die mindestens eine Anweisung zu Folgendem auszuführen:
Identifizieren einer Größe eines Textes, der in dem ersten UI-Element enthalten ist, basierend auf einer Entfernung zwischen der externen Vorrichtung und der elektronischen Einrichtung; und
Steuern der Anzeige, um die Größe des ersten UI-Elements, das angezeigt wird, basierend auf der identifizierten Größe des Textes anzupassen.

3. Elektronische Einrichtung nach Anspruch 2, wobei der Prozessor ferner dazu konfiguriert ist, die mindestens eine Anweisung zu Folgendem auszuführen:
basierend auf einem Identifizieren, dass die Entfernung zwischen der externen Vorrichtung und der elektronischen Einrichtung eine erste Entfernung ist, Identifizieren der Größe des Textes, der in dem ersten UI-Element enthalten ist, als eine erste Größe; und
basierend auf einem Identifizieren, dass die Entfernung zwischen der externen Vorrichtung und der elektronischen Einrichtung eine zweite Entfernung ist, die größer als die erste Entfernung ist, Identifizieren der Größe des Textes, der in dem ersten UI-Element enthalten ist, als eine zweite Größe, die größer als die erste Größe ist.

4. Elektronische Einrichtung nach Anspruch 2, wobei der Prozessor ferner dazu konfiguriert ist, die mindestens eine Anweisung zu Folgendem auszuführen:
Empfangen von Sichtinformationen eines Benutzers von der externen Vorrichtung durch die Kommunikationsschnittstelle; und
Identifizieren der Größe des Textes, der in dem ersten UI-Element enthalten ist, basierend auf den Sichtinformationen des Benutzers und der Entfernung zwischen der externen Vorrichtung und der elektronischen Einrichtung.

5. Elektronische Einrichtung nach Anspruch 4, wobei der Prozessor ferner dazu konfiguriert ist, die mindestens eine Anweisung zu Folgendem auszuführen:
Vorhersagen der Sichtinformationen des Benutzers basierend auf der Größe des Textes, der auf der Anzeige angezeigt wird, und der Entfernung zwischen der elektronischen Einrichtung und dem Benutzer der externen Vorrichtung; und
Identifizieren der Größe des Textes, der in dem ersten UI-Element enthalten ist, basierend auf den vorhergesagten Sichtinformationen des Benutzers und der Entfernung zwischen der externen Vorrichtung und der elektronischen Einrichtung.

6. Elektronische Einrichtung nach Anspruch 1, wobei der Prozessor ferner dazu konfiguriert ist, die mindestens eine Anweisung zu Folgendem auszuführen:
basierend auf einem Identifizieren, dass sich die externe Vorrichtung auf einer linken Seite der elektronischen Einrichtung befindet, Steuern der Anzeige, um das erste UI-Element zur linken Seite zu drehen und anzuzeigen; und
basierend auf einem Identifizieren, dass sich die externe Vorrichtung auf einer rechten Seite der elektronischen Einrichtung befindet, Steuern der Anzeige, um das erste UI-Element zur rechten Seite zu drehen und anzuzeigen.

7. Elektronische Einrichtung nach Anspruch 1, wobei der Prozessor ferner dazu konfiguriert ist, die mindestens eine Anweisung zu Folgendem auszuführen:
basierend darauf, dass die UI auf einem Bild bezüglich eines Inhalts angezeigt wird, Steuern der Anzeige, sodass sie das Bild bezüglich des Inhalts auf einer ersten Schicht anzeigt und die UI auf einer zweiten Schicht anzeigt; und
Steuern der Anzeige, um mindestens eines von der Größe oder der Form des ersten UI-Elements, das auf der zweiten Schicht angezeigt wird, anzupassen, basierend auf den Informationen bezüglich der Position der externen Vorrichtung, während das Bild bezüglich des Inhalts, das auf der ersten Schicht angezeigt wird, beibehalten wird.

8. Elektronische Einrichtung nach Anspruch 1, wobei das Steuersignal ein Steuersignal zum Bewegen einer Markierung ist, die auf einem UI-Element aus der Vielzahl von UI-Elementen angezeigt wird.

9. Elektronische Einrichtung nach Anspruch 1, wobei der Prozessor ferner dazu konfiguriert ist, die mindestens eine Anweisung zu Folgendem auszuführen:
Erlangen der Informationen bezüglich der Position der externen Vorrichtung in Echtzeit basierend auf dem Positionsmesssignal; und
Steuern der Anzeige, um mindestens eines von der Größe oder der Form des ersten UI-Elements, das angezeigt wird, basierend auf den Informationen bezüglich der Position der externen Vorrichtung, anzupassen.

10. Steuerungsverfahren einer elektronischen Einrichtung, wobei das Steuerungsverfahren Folgendes umfasst:
basierend darauf, dass ein Steuersignal durch eine externe Vorrichtung empfangen wird, während eine Benutzerschnittstelle (UI), die eine Vielzahl von UI-Elementen enthält, angezeigt wird, Übertragen eines Anforderungssignals an die externe Vorrichtung, um ein Positionsmesssignal anzufordern;
basierend darauf, dass das Positionsmesssignal von der externen Vorrichtung empfangen wird, Erlangen von Informationen bezüglich einer Position der externen Vorrichtung basierend auf dem Positionsmesssignal;
Identifizieren eines ersten UI-Elements, an dem sich eine Markierung befindet, aus der Vielzahl von UI-Elementen basierend auf dem Steuersignal; und
**dadurch gekennzeichnet, dass** es ferner Folgendes umfasst:
Anpassen mindestens eines von einer Größe oder einer Form des ersten UI-Elements, das angezeigt wird, basierend auf den Informationen bezüglich der Position der externen Vorrichtung.

11. Steuerungsverfahren nach Anspruch 10, wobei das Anzeigen Folgendes umfasst:
Identifizieren einer Größe eines Textes, der in dem ersten UI-Element enthalten ist, basierend auf einer Entfernung zwischen der externen Vorrichtung und der elektronischen Einrichtung;
Anpassen der Größe des ersten UI-Elements, das angezeigt wird, basierend auf der identifizierten Größe des Textes.

12. Steuerungsverfahren nach Anspruch 11, wobei das Identifizieren Folgendes umfasst:
basierend auf einem Identifizieren, dass die Entfernung zwischen der externen Vorrichtung und der elektronischen Einrichtung eine erste Entfernung ist, Identifizieren der Größe des Textes, der in dem ersten UI-Element enthalten ist, als eine erste Größe; und
basierend auf einem Identifizieren, dass die Entfernung zwischen der externen Vorrichtung und der elektronischen Einrichtung eine zweite Entfernung ist, die größer als die erste Entfernung ist, Identifizieren der Größe des Textes, der in dem ersten UI-Element enthalten ist, als eine zweite Größe, die größer als die erste Größe ist.

13. Steuerungsverfahren nach Anspruch 11, wobei das Steuerungsverfahren Empfangen von Sichtinformationen eines Benutzers von der externen Vorrichtung umfasst; und
wobei das Identifizieren Identifizieren der Größe des Textes, der in dem ersten UI-Element enthalten ist, basierend auf den Sichtinformationen des Benutzers und der Entfernung zwischen der externen Vorrichtung und der elektronischen Einrichtung umfasst.

14. Steuerungsverfahren nach Anspruch 11, wobei das Steuerungsverfahren Vorhersagen von Sichtinformationen eines Benutzers basierend auf der Größe des Textes, der auf der Anzeige angezeigt wird, und der Entfernung zwischen der elektronischen Einrichtung und dem Benutzer, der die externe Vorrichtung benutzt, umfasst; und
wobei das Identifizieren Identifizieren der Größe des Textes, der in dem ersten UI-Element enthalten ist, basierend auf den vorhergesagten Sichtinformationen des Benutzers und der Entfernung zwischen der externen Vorrichtung und der elektronischen Einrichtung umfasst.

15. Steuerungsverfahren nach Anspruch 10, wobei das Anzeigen Folgendes umfasst:
basierend auf einem Identifizieren, dass sich die externe Vorrichtung auf einer linken Seite der elektronischen Einrichtung befindet, Drehen und Anzeigen des ersten UI-Element zur linken Seite; und
basierend auf einem Identifizieren, dass sich die externe Vorrichtung auf einer rechten Seite der elektronischen Einrichtung befindet, Drehen und Anzeigen des ersten UI-Elements zur rechten Seite.

## Revendications

1. Appareil électronique (100) comprenant :
une interface de communication (130) configurée pour communiquer avec un dispositif externe (200) ;
un affichage (110) ;
une mémoire (160) configurée pour stocker au moins une instruction ; et
un processeur (170) connecté à l'interface de communication, à l'affichage et à la mémoire,
dans lequel le processeur (170) est configuré pour exécuter l'au moins une instruction pour :
sur la base de la réception d'un signal de commande par le dispositif externe tandis qu'une interface utilisateur (UI) comprenant une pluralité d'éléments UI est affichée par l'affichage, commander à l'interface de communication de transmettre, au dispositif externe, un signal de demande pour demander un signal de mesure de localisation ;
sur la base de la réception du signal de mesure de localisation en provenance du dispositif externe, obtenir des informations concernant une localisation du dispositif externe sur la base du signal de mesure de localisation ;
identifier un premier élément UI au niveau duquel se trouve une surbrillance, parmi la pluralité d'éléments UI, sur la base du signal de commande ; et
**caractérisé en ce que** le processeur est en outre configuré pour exécuter l'au moins une instruction pour :
commander à l'affichage d'ajuster au moins l'une d'une taille ou d'une forme du premier élément UI qui est affiché sur la base des informations concernant la localisation du dispositif externe.

2. Appareil électronique selon la revendication 1, dans lequel le processeur est en outre configuré pour exécuter l'au moins une instruction pour :
identifier une taille d'un texte inclus dans le premier élément UI sur la base d'une distance entre le dispositif externe et l'appareil électronique ; et
commander à l'affichage d'ajuster la taille du premier élément UI qui est affiché, sur la base de la taille identifiée du texte.

3. Appareil électronique selon la revendication 2, dans lequel le processeur est en outre configuré pour exécuter l'au moins une instruction pour :
sur la base de l'identification que la distance entre le dispositif externe et l'appareil électronique est une première distance, identifier la taille du texte inclus dans le premier élément UI en tant que première taille ; et
sur la base de l'identification que la distance entre le dispositif externe et l'appareil électronique est une deuxième distance qui est plus grande que la première distance, identifier la taille du texte inclus dans le premier élément UI en tant que deuxième taille qui est plus grande que la première taille.

4. Appareil électronique selon la revendication 2, dans lequel le processeur est en outre configuré pour exécuter l'au moins une instruction pour :
recevoir des informations de vision d'un utilisateur en provenance du dispositif externe par l'intermédiaire de l'interface de communication ; et
identifier la taille du texte inclus dans le premier élément UI sur la base des informations de vision de l'utilisateur et de la distance entre le dispositif externe et l'appareil électronique.

5. Appareil électronique selon la revendication 4, dans lequel le processeur est en outre configuré pour exécuter l'au moins une instruction pour :
prédire les informations de vision de l'utilisateur sur la base de la taille du texte affiché sur l'affichage et de la distance entre l'appareil électronique et l'utilisateur du dispositif externe ; et
identifier la taille du texte inclus dans le premier élément UI sur la base des informations de vision prédites de l'utilisateur et de la distance entre le dispositif externe et l'appareil électronique.

6. Appareil électronique selon la revendication 1, dans lequel le processeur est en outre configuré pour exécuter l'au moins une instruction pour :
sur la base de l'identification que le dispositif externe se trouve à gauche de l'appareil électronique, commander à l'affichage de tourner et d'afficher le premier élément UI à gauche ; et
sur la base de l'identification que le dispositif externe se trouve à droite de l'appareil électronique, commander à l'affichage de tourner et d'afficher le premier élément UI à droite.

7. Appareil électronique selon la revendication 1, dans lequel le processeur est en outre configuré pour exécuter l'au moins une instruction pour :
sur la base de l'affichage de l'UI sur une image concernant un contenu, commander à l'affichage d'afficher l'image concernant le contenu sur une première couche et d'afficher l'UI sur une deuxième couche ; et
commander à l'affichage d'ajuster au moins l'une de la taille ou de la forme du premier élément UI qui est affiché sur la deuxième couche, sur la base des informations concernant la localisation du dispositif externe tandis que l'image concernant le contenu affiché sur la première couche est maintenue.

8. Appareil électronique selon la revendication 1, dans lequel le signal de commande est un signal de commande pour déplacer une surbrillance affichée sur un élément UI de la pluralité d'éléments UI.

9. Appareil électronique selon la revendication 1, dans lequel le processeur est en outre configuré pour exécuter l'au moins une instruction pour :
obtenir les informations concernant la localisation du dispositif externe en temps réel sur la base du signal de mesure de localisation ; et
commander à l'affichage d'ajuster au moins l'une de la taille ou de la forme du premier élément UI qui est affiché, sur la base des informations concernant la localisation du dispositif externe.

10. Procédé de commande d'un appareil électronique, le procédé de commande comprenant :
sur la base de la réception d'un signal de commande par un dispositif externe tandis qu'une interface utilisateur (UI) comprenant une pluralité d'éléments UI est affichée, la transmission d'un signal de demande au dispositif externe pour demander un signal de mesure de localisation ;
sur la base de la réception du signal de mesure de localisation en provenance du dispositif externe, l'obtention d'informations concernant une localisation du dispositif externe sur la base du signal de mesure de localisation ;
l'identification d'un premier élément UI au niveau duquel se trouve une surbrillance, parmi la pluralité d'éléments UI, sur la base du signal de commande ; et
**caractérisé en ce qu'**il comprend en outre :
l'ajustement d'au moins l'une d'une taille ou d'une forme du premier élément UI qui est affiché, sur la base des informations concernant la localisation du dispositif externe.

11. Procédé de commande selon la revendication 10, dans lequel l'affichage comprend :
l'identification d'une taille d'un texte inclus dans le premier élément UI sur la base d'une distance entre le dispositif externe et l'appareil électronique ; et
l'ajustement de la taille du premier élément UI qui est affiché, sur la base de la taille identifiée du texte.

12. Procédé de commande selon la revendication 11, dans lequel l'affichage comprend :
sur la base de l'identification que la distance entre le dispositif externe et l'appareil électronique est une première distance, l'identification de la taille du texte inclus dans le premier élément UI en tant que première taille ; et
sur la base de l'identification que la distance entre le dispositif externe et l'appareil électronique est une deuxième distance qui est plus grande que la première distance, l'identification de la taille du texte inclus dans le premier élément UI en tant que deuxième taille qui est plus grande que la première taille.

13. Procédé de commande selon la revendication 11, dans lequel le procédé de commande comprend la réception d'informations de vision d'un utilisateur en provenance du dispositif externe ; et
dans lequel l'identification comprend l'identification de la taille du texte inclus dans le premier élément UI sur la base des informations de vision de l'utilisateur et de la distance entre le dispositif externe et l'appareil électronique.

14. Procédé de commande selon la revendication 11, dans lequel le procédé de commande comprend la prédiction d'informations de vision d'un utilisateur sur la base de la taille du texte affiché sur l'affichage et de la distance entre l'appareil électronique et l'utilisateur à l'aide du dispositif externe ; et
dans lequel l'identification comprend l'identification de la taille du texte inclus dans le premier élément UI sur la base des informations de vision prédites de l'utilisateur et de la distance entre le dispositif externe et l'appareil électronique.

15. Procédé de commande selon la revendication 10, dans lequel l'affichage comprend :
sur la base de l'identification que le dispositif externe se trouve à gauche de l'appareil électronique, la rotation et l'affichage du premier élément UI à gauche ; et
sur la base de l'identification que le dispositif externe se trouve à droite de l'appareil électronique, la rotation et l'affichage du premier élément UI à droite.
